# EUROPÄISCHE PATENTSCHRIFT

(11) **EP 2 019 533 B1**
(45) Veröffentlichungstag und Bekanntmachung des Hinweises auf die Patenterteilung: **15.06.2016**
(21) Anmeldenummer: 08013284.8
(22) Anmeldetag: 23.07.2008
(51) Int. Cl.: H04L 29/08

(54) **DATENTRÄGER MIT EINEM MIDLET**
Data carrier with a MIDIet
Support de données doté d'un MIDlet

(30) Priorität: 26.07.2007 DE 102007034975
(43) Veröffentlichungstag der Anmeldung: 28.01.2009
(73) Patentinhaber: Giesecke & Devrient GmbH, 81677 München (DE)
(72) Erfinder: Schnellinger, Michael, 84032 Landshut (DE); Huber, Ulrich, 88161 Lindenberg (DE)

(56) Entgegenhaltungen:
- FR-A- 2 893 803
- GB-A- 2 406 664

## Beschreibung

Die vorliegende Erfindung betrifft ein Verfahren zum Installieren eines auf einem portablen Datenträger befindlichen MIDlets auf einem Telekommunikationsendgerät sowie einen derartigen portablen Datenträger.

Unter einem MIDlet versteht man ein Softwareprogramm für ein Telekommunikationsendgerät, z. B. für ein Mobilfunktelefon oder ein Smartphone, das bestimmte Anwendungen unabhängig von einer in das Telekommunikationsendgerät eingesetzten Mobilfunkkarte zur Verfügung stellt. MIDlets sind zumeist in der Programmiersprache Java geschrieben und entsprechen dem "Mobile Information Device Profile" (MIDP), einem speziell auf mobile Telekommunikationsendgeräte abgestimmten Teil der Java 2 Plattform, Microedition (J2ME).

Üblicherweise werden MIDlets auf Servern im Internet zum Herunterladen bereitgestellt, beispielsweise über eine Over-the-Air-Schnittstelle des Telekommunikationsendgeräts oder eine entsprechende Funktionalität eines Personalcomputers. In diesem Zusammenhang offenbart die WO 2004/114125 Möglichkeiten zur Kommunikation zwischen einem Mobilfunkgerät und einem darauf installierten MIDlet.

Das Herunterladen von MIDlets aus dem Internet durch den Nutzer birgt insbesondere bei MIDlets, die auf bestimmte Mobilfunkkarten bzw. deren Applikationen abgestimmt sind, die Gefahr von Kompatibilitätsproblemen, da leicht falsche MIDlets heruntergeladen und installiert werden können. Dies kann dadurch vermieden werden, dass ein MIDlet zusammen mit der betreffenden Mobilfunkkarte als "Bundle" an den Nutzer ausgeliefert wird, z.B. auf einem separaten Datenträger zusätzlich zu der eigentlichen Mobilfunkkarte oder im Rahmen der Zustellung eines Kennungsbriefs. Hierbei besteht für den möglicherweise technisch unversierten Nutzer das Problem, das MIDlet ordnungsgemäß und fehlerfrei auf seinem Telekommunikationsendgerät zu installieren.

Aus der US 2006/0161839 ist ein Verfahren zum Verfahren zum Installieren eines MIDlets auf einem Handy bekannt, wobei das MIDlet auch von einer Smart Card bereitgestellt werden kann. Zu dem MIDlet gehört ein "Provisioning Document", das auf dem Handy hinterlegt ist und z.B. die Form einer XML-Datei haben kann. Das Provisioning Document bestimmt das Verhalten des MIDlets bei einer Kommunikation über die Luftschnittstelle. Das Provisioning Document kann selbst über die Luftschnittstelle über einen Terminalserver geladen oder durch einen Bootstrap-Prozeß installiert werden. Ein genauer Mechanismus zur Steuerung der Installation eines Midlets auf einem Handy durch die Smart Card wird nicht erläutert.

Aus der GB 2 406 664 ist ein Verfahren zur selbsttätigen Registrierung von auf ein Handy geladenen Anwendungsprogrammen als Vorbedingung für ihre Ausführung entnehmbar. Bei den Anwendungsprogrammen kann es sich um Java-Midlets handeln, die von einer Speicherkarte, insbesondere einer MMC oder SD-Karte geladen werden. Das MIDlet wird dann auf dem Handy ausgeführt. Einzelheiten des Mechanismus zur Installation eines Midlets von einer Speicherkarte werden nicht erläutert.
Es ist Aufgabe der vorliegenden Erfindung, ein Verfahren zum einfachen und fehlerfreien Installieren eines MIDlets auf einer Mobilfunkkarte bereitzustellen.

Diese Aufgabe wird erfindungsgemäß durch ein Verfahren sowie einen Datenträger mit den Merkmalen der unabhängigen Ansprüche gelöst. In davon abhängigen Ansprüchen sind vorteilhafte Ausgestaltungen und Weiterbildungen der Erfindung angegeben.

Erfindungsgemäß wird ein auf einem Telekommunikationsendgerät zu installierendes MIDlet in einem Speicher eines portablen Datenträgers abgespeichert, der über eine geeignete Datenkommunikationsschnittstelle eine Datenkommunikationsverbindung zu dem Telekommunikationsendgerät aufbauen kann. Nach einem Verbinden des Datenträgers mit dem Telekommunikationsendgerät über die Datenkommunikationsschnittstelle wird das MIDlet von dem Datenträger auf das Telekommunikationsendgerät übertragen und dort installiert, indem das Telekommunikationsendgerät auf das in dem Speicher des Datenträgers liegende MIDlet zugreift und es ausliest. Das MIDlet wird schließlich auf dem Telekommunikationsendgerät installiert, indem es in einem von einem Prozessor des Telekommunikationsendgerätes ausführbaren Format in einem Installationsspeicher des Telekommunikationsendgerätes abgelegt wird. Die Bereitstellung eines Provisioning Documents ist nicht nötig. Erfindungsgemäß wird ausgehend von einer ausgeführten SIM-Toolkit-Applikation eine Webserver Verbindung benutzt, um dem Telekommunikationsendgerät das Installieren des MIDlets von dem portablen Datenträger zu ermöglichen.

Die besondere Funktionalität des Speichers des portablen Datenträgers im Hinblick auf die Installation von MIDlets wird durch eine Steuereinrichtung des Datenträgers bereitgestellt, die Schreib- und Lesezugriffe auf den Speicher des Datenträgers überwacht und steuert. Insbesondere ermöglicht die Steuereinrichtung einen Schreibzugriff einer externen Stelle auf den Speicher des Datenträgers, mit dem das zur Installation auf einem Telekommunikationsendgerät bestimmte MIDlet in den Speicher eingeschrieben wird, sowie einen Lesezugriff eines mit dem Datenträger verbundenen Telekommunikationsendgerätes, mit dem das MIDlet aus dem Speicher des Datenträgers ausgelesen und auf dem Telekommunikationsendgerät installiert wird.

Durch das erfindungsgemäße Verfahren wird eine direkte Verknüpfung zwischen einem MIDlet und einem in ein Telekommunikationsendgerät einzusetzenden portablen Datenträger, z. B. eine Mobilfunkkarte, hergestellt. Dadurch muss ein Nutzer ein MIDlet nicht mehr aus dem Internet herunterladen und sich der Gefahr aussetzen, ein falsches MIDlet zu erhalten und/ oder zu installieren. Darüber hinaus können auch MIDlets entwickelt werden, die funktional eng auf den portablen Datenträger abgestimmt sind bzw. die mit auf dem Datenträger ausführbaren Applikationen interagieren, was insbesondere für Sicherheitsfunktionen sinnvoll ist. Es wird eine besonders einfache Installation eines MIDlets durch eine entsprechende Installationssequenz zwischen dem portablen Datenträger und einem Telekommunikationsendgerät ermöglicht, die automatisch und für einen Nutzer transparent erfolgen kann. Aufgrund der Möglichkeit, MIDlets und Mobilfunkkarten gleichzeitig herzustellen und an die Endnutzer auszuliefern, ergibt sich für Mobilfunkkartenhersteller und MIDlet-Anbieter auch eine Kostenreduktion aufgrund eines Einsparens von MIDlet-Servern im Internet oder einer gleichzeitigen Auslieferung von zusätzlichen Datenträgern, auf denen MIDlets gespeichert sind.

Vorzugsweise ist ein erfindungsgemäßer Datenträger und dessen Speicher über ein bestimmtes Kommunikationsprotokoll ansprechbar, das von einer Kommunikationseinrichtung des Datenträgers bereitgestellt bzw. unterstützt wird, über das ein externes Gerät, z. B. im Rahmen eines Herstellungs-, Initialisierungs- oder Personalisierungsprozesses des Datenträgers, ein MIDlet in den Speicher einschreiben kann. Der Speicher des Datenträgers ist dabei vorzugsweise ein auch anderweitig nutzbarer Massenspeicher, der mit einem entsprechenden Dateisystem ausgestattet ist, so dass das MIDlet und gegebenenfalls andere Daten in einem PC-kompatiblen Format in dem Massenspeicher abgespeichert werden können. In diesem Zusammenhang ist die Steuereinrichtung jeweils eingerichtet, einen derartigen Schreibzugriff gemäß einem geeigneten Kommunikationsprotokoll auf den Massenspeicher zu ermöglichen.

Die Datenkommunikationsschnittstelle des Datenträgers, die der Verbindung des Datenträgers mit einem Telekommunikationsendgerät dient, ist insbesondere im Falle eines Massenspeichers eine Hochgeschwindigkeitsschnittstelle, so dass es sich bei dem Datenträger vorzugsweise um eine USB-Speicherkarte, eine SD-Speicherkarte oder eine MMC-Multimediakarte handeln kann. Dementsprechend wird von der Steuereinrichtung der Lesezugriff eines mit dem Datenträger verbundenen Telekommunikationsendgeräts über die Hochgeschwindigkeitsschnittstelle auf den Speicher zum Auslesen des MIDlets ermöglicht.

Bei einer besonderen Ausführungsform der Erfindung umfasst der Datenträger einen von einem Prozessor des Datenträgers ausführbaren Webserver, so dass der portable Datenträger prinzipiell als Webserver für ein weiteres elektronisches Gerät, insbesondere für ein Telekommunikationsendgerät, dienen kann. Der Webserver stellt einem mit dem Datenträger verbundenen Telekommunikationsgerät bestimmte, in dem Speicher des Datenträgers vorliegende Informationsdaten - z.B. in Form von http-Anfragen gemäß dem "hypertext transfer protocol" - als abrufbare Inhalte bereit. Die Steuereinrichtung ist bei dieser Ausführungsform eingerichtet, einen Schreibzugriff eines externen Geräts auf den Speicher zuzulassen, mit dem das MIDlet als von dem Telekommunikationsendgerät über den Webserver abrufbare Informationsdaten in den Speicher eingeschrieben wird. Ein Abruf des MIDlets aus dem Speicher kann dann über ein von dem Webserver unterstütztes Internetprotokoll erfolgen, beispielsweise indem einem mit dem Datenträger verbundenen Telekommunikationsendgerät eine von diesem ausführbare, an den Webserver gerichtete http-Anfrage bereitdass das Telekommunikationsendgerät durch Absetzen der http-Anfrage an den Webserver eine Installation des MIDlets veranlassen kann. Vorzugsweise wird das Telekommunikationsendgerät von einer auf dem Datenträger vorliegenden und von diesem ausführbaren Applikation veranlasst, das MIDlet mittels einer derartigen http-Anfrage zu installieren.

Es ist auch möglich, einen Lesezugriff eines Telekommunikationsendgeräts auf den Speicher mittels eines auf dem Telekommunikationsendgerät installierten Browsers durchzuführen, beispielsweise durch Absetzen einer http-Anfrage an den Webserver durch Selektieren einer auf das MIDlet verweisenden Verknüpfung in dem Browser. Eine Installation des MIDlets über Selektieren einer Verknüpfung in einem Browser des Telekommunikationsendgerätes kann dabei sowohl von einem Nutzer des Telekommunikationsendgerätes veranlasst werden, indem er eine entsprechende Verknüpfung in dem Browser "anklickt" und dadurch auflöst, als auch, wie oben beschrieben, von einer auf dem Datenträger installierten Applikation, die möglicherweise auch nach einer erfolgten Installation des MIDlets mit diesem interagiert.

Eine weitere Variante des Auslesens und Installierens eines auf dem Datenträger vorliegenden MIDlets ist, das MIDlet während eines Anschaltvorgangs des Telekommunikationsendgerätes mittels einer von dem Telekommunikationsendgerät bereitgestellten Bootstrapping-Funktion aus dem Speicher des Datenträgers auszulesen und per Bootstrapping auf dem Telekommunikationsendgerät zu installieren. Hierfür umfasst das Telekommunikationsendgerät eine spezielle Bootstrapping-Funktionalität, die beispielsweise eine Erweiterung des Bootstrapping für aus dem Internet herunterladbare Daten gemäß dem OMA-("Open Mobile Alliance") Standard sein kann. Beim Einschalten eines Telekommunikationsendgerätes wird ein auf dem portablen Datenträger befindliches MIDlet durch das Bootstrapping-Verfahren automatisch auf dem Telekommunikationsendgerät installiert.

Vorzugsweise wird ein MIDlet bereits während oder unmittelbar nach dem Herstellungsprozess des Datenträgers von dem Hersteller mittels eines entsprechenden externen Geräts in den portablen Datenträger eingespielt. Die Installation des MIDlets auf einem Telekommunikationsendgerät erfolgt dann nach Auslieferung des Datenträgers durch den betreffenden Endnutzer.

Bei dem portablen Datenträger handelt es sich vorzugsweise um eine Mobilfunkkarte, insbesondere um eine (U)SIM-Mobilfunkkarte, die in ein mobilfunkfähiges Telekommunikationsendgerät, z. B. ein Mobilfunktelefon, Smart Phone, oder einen "Personal Digital Assistant" (PDA) eingesetzt wird. In diesem Zusammenhang ist das Telekommunikationsendgerät vorzugsweise ein Java-fähiges Mobilfunktelefon, so dass ein auf einer (U)SIM-Mobilfunkkarte abgelegtes Java-MIDlet auf dem Telekommunikationsendgerät installiert und ausgeführt werden kann. Hierbei ist eine auf einer derartigen (U)SIM-Mobilfunkkarte lauffähige Applikation vorzugsweise eine SIM-Toolkit-Applikation. Bei Ausführung als (U)SIM-Mobilfunkkarte ergibt sich der zusätzliche Vorteil, dass diese von Hause ein Sicherheitselement ist, das ohne besonderen Zusatzaufwand eine starke Kontrolle des Zugangs zu auf der Karte gespeicherten Daten und Informationen erlaubt.

Das MIDlet kann insbesondere so ausgestaltet sein, dass es nach der Installation mit einer auf dem Datenträger ausführbaren Applikation derart zusammenwirkt, dass die Applikation und das MIDlet eine kombinierte Anwendung bilden, die dem Telekommunikationsendgerät bestimmte, vorzugsweise sicherheitsrelevante Funktionalitäten bereitstellt, z. B. Banking-Anwendungen, ein Zugangsprüfsystem oder andere sicherheitsrelevante Anwendungen, die insbesondere die Sicherheitsaspekte einer (U)SIM-Mobilfunkkarte nutzen oder erfordern. Die Applikation kann hierbei beispielsweise über eine Java-Programmierschnittstelle (API) mit dem auf dem Telekommunikationsendgerät installierten MIDlet kommunizieren, wobei die von der Applikation bereitgestellten Funktionen insbesondere über die Java-Programmierschnittstelle von dem auf dem Telekommunikationsendgerät installierten MIDlet abrufbar sind. Beispielsweise kann das MIDlet auf dem Telekommunikationsendgerät eine graphische Benutzeroberfläche zum Zugriff auf Funktionen der Applikation durch einen Nutzer bereitstellen. Ein MIDlet kann auch so ausgestaltet sein, dass es nur von der (U)SIM-Mobilfunkkarte installiert wird und während der Funktion im Telekommunikationsendgerät nicht mehr mit der (U)SIM-Mobilfunkkarte kommuniziert.

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig. 1: einen erfindungsgemäßen, als (U)SIM-Mobilfunkkarte ausgestalteten portablen Datenträger vor der Auslieferung an den Endnutzer;
- Fig. 2: einen schematischen Verfahrensablauf zur Installation eines MIDlets auf einem als Mobilfunktelefon ausgestalteten Telekommunikationsendgerät; und
- Fig. 3: einen schematischen Verfahrensablauf zum Ausführen eines auf einem Mobilfunktelefon installierten MIDlets,
- Fig. 4: einen Verfahrensablauf zur Installation eines MIDlets von einer Mobilfunkkarte bei Bereitstellung durch einen Webserver in Form eines Flussdiagramms.

Ein Java-MIDlet ist eine Applikation, die in einem Java-fähigen Mobilfunktelefon installiert wird und von einem Nutzer des Mobilfunktelefons ausgeführt werden kann. Ein MIDlet entspricht den Vorgaben des "Mobile Information Device Profile" (MIDP) und repräsentiert ein Java-Paket aus unterschiedlichen Java-Klassen, die zur Installation in einen Installationsspeicher des Mobilfunktelefons geladen werden, z. B. indem eine Verknüpfung in einem Internet-Browser des Mobilfunktelefons aufgelöst ("angeklickt") wird. Die in dem Mobilfunktelefon durchzuführende Installationsprozedur besteht beispielsweise aus Konsistenz- und Zertifikatprüfungen, die die Kompatibilität und Integrität des MIDlets sicherstellen. In den einfachsten Fällen handelt es sich bei MIDlets um Spiele für Mobilfunktelefone, z.B. so genannte "Java-Games".

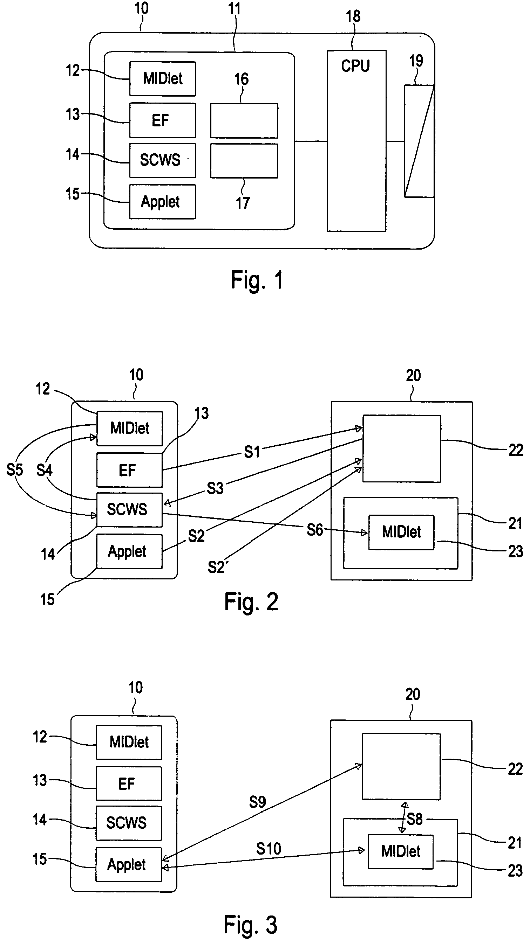

Vorliegend wird ein zur Installation auf einem Mobilfunktelefon 20 bestimmtes MIDlet 12 bei oder unmittelbar nach der Herstellung einer (U)SIM-Mobilfunkkarte 10 in einem geeigneten Speicher 11 der Mobilfunkkarte 10 abgespeichert (vgl. Fig.1). Nach der Ausgabe der (U)SIM-Mobilfunkkarte 10 an einen Endnutzer eines entsprechenden Mobilfunktelefons 20 wird das MIDlet 12 durch eine vorgegebene Installationsprozedur (vgl. Fig. 2) aus dem Speicher 11 der (U)SIM-Mobilfunkkarte 10 ausgelesen und in dem Installationsspeicher 21 des Mobilfunktelefons 20 installiert. Danach steht das MIDlet zur Ausführung durch den Benutzer auf dem Mobilfunktelefon 20 bereit. Sofern eine kombinierte Anwendung bestehend aus einem auf dem Mobilfunktelefon 20 installierten MIDlet 23 und einer auf der (U)SIM-Mobilfunkkarte 10 ausführbaren Applikation 15 vorliegt, kommt es bei einer Ausführung des MIDlets 23 zu eine Interaktion und/ oder Datenkommunikation zwischen dem installierten MIDlet 23 und der Applikation 15 (vgl. Fig. 3).

Eine MIDlet-Suite besteht aus einer JAR-Containerdatei, die die eigentliche Funktionalität des MIDlets in Form von Java-Class-Dateien bereitstellt, und einer JAD-Beschreibungsdatei, die Angaben zu der JAR-Containerdatei bezüglich Klassen, Zertifikaten, Größen und dergleichen in Textform umfasst. Während einer Herstellung und/oder Personalisierung der (U)SIM-Mobilfunkkarte 10 werden diese beiden Dateien in einen entsprechenden Speicher 11 der (U)SIM-Mobilfunkkarte 10 eingeschrieben, der vorzugsweise ein nicht-flüchtiger Flash- oder EEPROM-Speicher ist. Der Schreibzugriff auf den Speicher 11 der (U)SIM-Mobilfunkkarte 10 zum Abspeichern des MIDlets 12 ist nur gemäß einem speziellen Kommunikationsprotokoll möglich, das von einer Kommunikationseinrichtung 17 der (U)SIM-Mobilfunkkarte 10 vorgegeben wird und von einem externen Gerät, das zur Personalisierung der Mobilfunkkarte 10 und zum Einschreiben des MIDlets 12 in den Speicher 11 verwendet wird, dementsprechend unterstützt werden muss. Derartige Protokolle sind beispielsweise das T=0-Chipkarten-Protokoll, das "Bearer Independent Protocol" (BIP), das "File Transfer Protocol" (FTP) oder das "Universal Serial Bus"-Protokoll bei Verwendung einer entsprechenden USB-Schnittstelle. Das Einschreiben des MIDlets 12 in den Speicher 11 der Mobilfunkkarte 10 durch ein externes Gerät ist vorzugsweise eine sichere, integritätsgeschützte und kontrollierte Ablage des MIDlets 12 in dem Speicher 11, die von einer Steuereinrichtung 16 der Mobilfunkkarte 10 bzw. einem in dem Speicher 11 vorliegenden Smartcard Webserver (SCWS) 14 überwacht wird.

Bei der Auslieferung der (U)SIM-Mobilfunkkarte 10 an den Endnutzer umfasst diese neben dem installierbaren MIDlet 12 und dem Webserver 14 auch weitere Applets 15 (z.B. in Form von Java- oder JavaCard-Applikationen und/oder SIM-Toolkit-Applikationen), die einem mit der Mobilfunkkarte 10 verbundenen Mobilfunktelefon 20 weitere Funktionen zur Verfügung stellen. Darüberhinaus liegen in dem Speicher 11 auch sonstige Daten, beispielsweise Verzeichnisse (EF; "elementary files"), die Daten 13 umfassen, die später zur Installation des MIDlets 12 benötigt werden.

Die (U)SIM-Mobilfunkkarte 10 umfasst weiterhin eine Steuereinrichtung 16 und eine Kommunikationseinrichtung 17, die genau wie das Applet 15 von einem Prozessor 18 der Mobilfunkkarte 10 ausführbare Applikationen sein können. Die Steuereinrichtung 16 steuert und ermöglicht das Einschreiben von Daten, insbesondere von MIDlets 12, in den Speicher 11 sowie das Auslesen von Daten, insbesondere MIDlets 12, aus dem Speicher 11 zur Installation durch ein Mobilfunktelefon 20. Die Kommunikationseinrichtung 17 stellt die Unterstützung von Kommunikationsprotokollen zum Einschreiben und/oder Auslesen von MIDlets 12 durch ein externes Gerät und/ oder ein Mobilfunktelefon 20 zur Verfügung. Die Steuereinrichtung 16 sowie die Kommunikationseinrichtung 17 können Teil eines Betriebssystems der Mobilfunkkarte 10 sein, wobei die Steuereinrichtung 16 insbesondere eine Komponente der internen Speicherverwaltung der Mobilfunkkarte 10 sein kann oder auch direkt als Steuereinheit in den Speicher 11 oder eine Treibersoftware des Speichers 11 integriert sein kann. Schließlich dient die Datenkommunikationsschnittstelle 19 einer Verbindung der (U)SIM-Mobilfunkkarte 10 mit einem Mobilfunktelefon 20 durch Koppeln an eine korrespondierende Schnittstelle des Mobilfunktelefons 20 (nichtdargestellt), z.B. durch Einsetzen der Mobilfunkkarte 10 in das Mobilfunktelefon 20.

Durch die in Fig.1 illustrierte (U)SIM-Mobilfunkkarte 10 wird eine kombinierte Auslieferung des MIDlets 12 mit der Mobilfunkkarte 10 in einer solchen Form erreicht, dass das MIDlet 12 in dem Speicher 11 der Mobilfunkkarte 10 abgespeichert ist und später von dem Mobilfunktelefon 20 ausgelesen werden kann, beispielsweise zur Installation durch einen Bootstrapping-Mechanismus des Mobilfunktelefons 20.

Nach einem Verbinden der Mobilfunkkarte 10 mit einem Mobilfunktelefon 20 über die Datenkommunikationsschnittstelle 19 ergeben sich prinzipiell drei verschiedene Möglichkeiten, das MIDlet 12 in dem Installationsspeicher 21 des Mobilfunktelefons 20 zu installieren:
- Bei einer ersten Ausgestaltung ist der Speicher 11 der (U)SIM-Mobilfunkkarte 10 als Massenspeicher ausgebildet, auf den über eine Hochgeschwindigkeitsschnittstelle zugegriffen werden kann - beispielsweise über eine USB-, SD- oder MMC-Schnittstelle -, so dass die (U)SIM-Mobilfunkkarte 10 unabhängig von ihrer Mobilfunkfunktionalität auch als Massenspeicher-Datenträger eingesetzt werden kann. Der Speicher 11 besitzt dann vorzugsweise ein PC-kompatibles Dateisystem, in dem ein MIDlet 12 neben vielerlei anderen Daten in herkömmlicher Weise abgespeichert sein kann. Das MIDlet 12 kann dann durch einen Lesezugriff auf den USB-Massenspeicher 11 durch das Mobilfunktelefon 20 mittels eines entsprechenden PC-kompatiblen Zugriffsmechanismus ausgelesen und in dem Installationsspeicher 21 in einem von dem Prozessor des Mobilfunktelefons ausführbaren Datenformat abgespeichert werden. Alternativ oder zusätzlich kann das Mobilfunktelefon 20 auch über einen installierten Browser 22 auf den Massenspeicher 11 der (U)SIM-Mobilfunkkarte 10 und somit auf das MIDlet 12 zugreifen.
- Bei einer zweiten Ausgestaltung kann das MIDlet 12 in dem Speicher 11 auch derart abgespeichert werden, dass es dem Webserver 14 Informationsdaten zur Verfügung stellt, die einem anfragenden Gerät bereitgestellt werden können. Demzufolge umfasst der Webserver 14 das MIDlet 12 derart, dass die Applikation 15, die vorzugsweise eine SIM-Toolkit-Applikation ist, die Installation des MIDlets 12 auf dem Mobilfunktelefon 20 anstoßen bzw. initiieren kann. Dies geschieht, indem eine http-Anfrage an den Webserver 14 formuliert wird, die eine Adresse des MIDlets 12 in Form einer auf das MIDlet 12 verweisenden URL-Verknüpfung umfasst, und an das Mobilfunktelefon 20 geschickt wird, so dass das Mobilfunktelefon 20 diese http-Anfrage wiederum an den Webserver 14 stellen kann, um auf das MIDlet 12 zu Installationszwecken zuzugreifen. Dabei wird die http-Anfrage durch Aktivieren der in dem Browser 22 des Mobilfunktelefons 20 angezeigten Verknüpfung ("Link"), die auf das MIDlet 12 verweist, realisiert. Somit kann der Webserver 14 der Mobilfunkkarte 10 die in dem Speicher 11 abgelegten MIDlets 12 dem Mobilfunktelefon 20 derart bereitstellen, dass diese in dem Installationsspeicher 21 als ausführbare MIDlets 23 abgelegt werden können.
- Eine dritte Ausgestaltung, um ein MIDlet 12 in einem Installationsspeicher 21 eines Mobilfunktelefons 20 zu installieren, basiert auf dem OMA-Standard "Smart Card Provisioning", der eine Installation von aus dem Internet heruntergeladenen MIDlets über ein Bootstrapping-Verfahren definiert. Dieser Standard kann auf solche MIDlets 12 erweitert werden, die zur Installation in den Installationsspeicher 21 von einer (U)SIM-Mobilfunkkarte 10 heruntergeladen werden. Dieser Prozess findet sofort nach oder beim Einschalten des Mobilfunktelefons 20 statt, so dass der Nutzer des Mobilfunktelefons 20 in der Regel keine Einflussmöglichkeiten besitzt. Nach dem Einschalten des Mobilfunktelefons 20 prüft eine Bootstrapping-Funktion des Mobilfunktelefons 20, ob auf der mit dem Mobilfunktelefon 20 verbundenen (U)SIM-Mobilfunkkarte 10 installierbare MIDlets 12 vorliegen. Falls dies der Fall ist, werden die MIDlets 12 per Bootstrapping installiert.

Fig. 2 illustriert einen prototypischen Verfahrensablauf zum Installieren eines MIDlets 12 in dem Installationsspeicher 21 des Mobilfunktelefons 20:
Im Schritt S1 werden für die Installation eines MIDlets 20 benötigten Daten 13 aus den entsprechenden EF-Verzeichnissen des in dem Speicher 11 ausgebildeten Dateibaums auf das Mobilfunktelefon 20 geladen. Dieser initiale Schritt kann veranlasst werden, indem ein bestimmter Menüeintrag über einen Browser 22 des Mobilfunktelefons 20 aktiviert wird. Im Falle einer Installation des MIDlets 12 per Bootstrapping können die Installationsdaten 13 beispielsweise die gemäß dem entsprechenden OMA-Standard vorgesehenen "Bootstrapping-EFs" sein.

Die Schritte S2 und S2' repräsentieren zwei Varianten, die eigentliche Installation des MIDlets 12 in den Installationsspeicher 21 auszulösen. In Schritt S2 wird im Mobilfunktelefon 20 ein Browser 22 gestartet, über den die Installation veranlasst werden kann. Der Browser 22 kann beispielsweise durch das SIM-Toolkit-Kommando "Launch Browser" gestartet werden, das von einem auf der (U)SIM-Mobilfunkkarte 10 installierten Applet 15 ausgeführt wird. Alternativ kann die Installation in Schritt S2' auch von einem Nutzer des Mobilfunktelefons 20 veranlasst werden, indem er den Browser 22 auf dem Mobilfunktelefon 20 startet und darin ein entsprechendes Lesezeichen ("Bookmark") auswählt. Falls das Mobilfunktelefon 20 den OMA-Standard "Smart Card Provisioning" unterstützt, sind dem Mobilfunktelefon 20 entsprechende Verbindungskonfigurationen zum Zugriff auf die (U)SIM-Mobilfunkkarte 10 bereits als Lesezeichen bekannt.

In Schritt S3 wird durch die Selektion eines Lesezeichens in dem Browser 22, das auf das zu installierende MIDlet 12 verweist, der Webserver 14 der Mobilfunkkarte 10 gestartet. Der Webserver 14 führt anschließend eine http-Anfrage des Browsers 22 aus, die eine Verknüpfung betrifft, die auf die Speicherposition des MIDlets 12 in dem Speicher 11 verweist. In Schritt S4 greift der Webserver 14 auf das angeforderte MIDlet 12 in dem Speicher 12 zu und stellt dieses schließlich in Schritt S5 dem Mobilfunktelefon 20 über den Browser 22 zur Installation bereit. Die Installation erfolgt schließlich in Schritt S6 dadurch, dass das MIDlet 12 in einem von einem Prozessor des Mobilfunktelefons 20 ausführbaren Format 23 in dem Installationsspeicher 21 abgelegt wird.

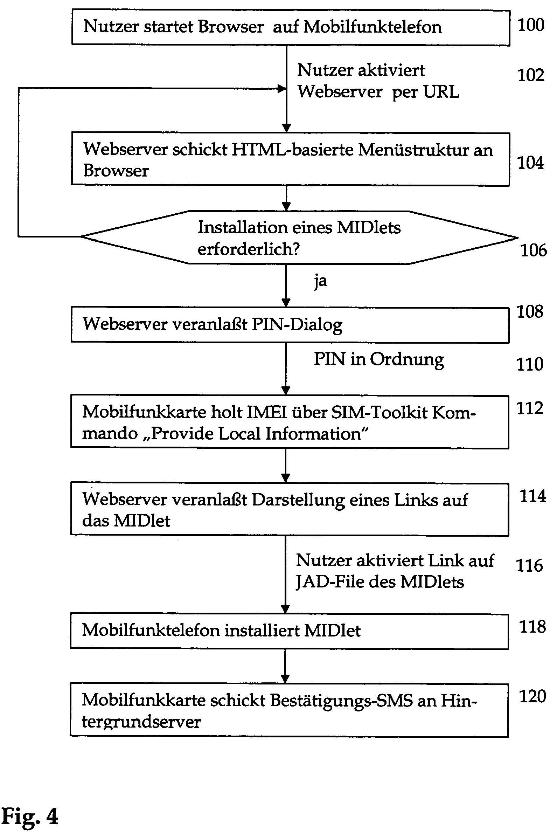

Fig. 4 veranschaulicht den vorstehend erläuterten prototypischen Verfahrensablauf nochmals in Form eines Flußdiagramms für die Installation eines MIDlets 12 von einer Mobilfunkkarte 10 mit einem Webserver 14, wobei auch einige Ausgestaltungsoptionen dargestellt sind. Ausgegangen wird von einer Situation, in der ein Nutzer den Browser 22 eines Mobilfunktelefons 20 gestartet hat, Schritt 100, und mittels des Browsers 22 durch eine auf der Mobilfunkkarte 10 abgelegte Anwendung in Form einer menübasierten, von dem Webserver 14 bereitgestellten Applikation surft, z.B. durch ein Informations-Service Applet eines Netzbetreibers, Schritt 100. Der Nutzer aktiviert hierbei den Webserver 14 mittels einer entsprechenden URL, Schritt 102. Der Webserver 14 schickt daraufhin eine HTML-basierte Menüstruktur an den Browser 22, Schritt 104, durch die der Nutzer geführt wird. Bei Erreichen eines bestimmten Punktes bei der Ausführung der Applikation wird die Installation eines MIDlets 12 benötigt, Schritt 106.

Vor Beginn der Installation des benötigen MIDlets 12 veranlaßt die Mobilfunkkarte 10 zweckmäßig einen an sich bekannten PIN-Dialog zur Authentisierung des Nutzers. Schritt 108. Hat der Nutzer seine PIN danach richtig präsentiert, Schritt 110, stellt die vom Webserver 14 auf der Mobilfunkkarte 10 bereitgestellte Applikation dem Mobilfunktelefon 20 einen Link bereit, der auf das in der Mobilfunkkarte 10 abgelegte MIDlet 12 verweist, Schritt 114. Technisch ist der Link eine Referenz auf ein lokal auf der Mobilfunkkarte 10 abgelegtes JAD-File. Der Nutzer aktiviert den angezeigten Link, etwa durch Anklicken, Schritt 116. Das MIDlet 12 wird danach in das Mobilfunktelefon 20 geladen und nachfolgend installiert, Schritt 118. Optional kann vorgesehen sein, daß die Mobilfunkkarte 10 nach erfolgreicher Installation des MIDlets 12 eine Bestätigungs-SMS an einen Hintergrundserver schickt, Schritt 120.

In einer weiteren optionalen Ausgestaltung stellt die Applikation nach der Ladefreigabe durch den Nutzer in Schritt 114 zunächst noch eine Verbindung zu einem Hintergrundserver her, z.B. mittels SMS oder über TCP/IP, und fordert von diesem bestimmte Daten an, bevor das Laden des MIDlets 12 tatsächlich erfolgt. Im Rahmen der Verbindung mit dem Hintergrundserver kann eine Aktualisierung eines MIDlets 12 erfolgen oder es kann ein neues MIDlet auf die Mobilfunkkarte 10 geladen werden, welches dann dem Mobilfunktelefon 20 zunächst zur Installation angeboten wird. Vorgesehen sein kann ferner, daß ein MIDlet 12 nicht unmittelbar an ein Mobilfunktelefon 20 übertragen wird, sondern der Webserver 14 auf der Mobilfunkkarte 10 vor der Übertragung die IMEI (International Mobile Equipment Identity) des Mobilfunktelefons 20 prüft, die er hierzu z.B. mit dem SIM-Toolkit-Kommando "Provide Local Information" anfordert, Schritt 112. Auf der Mobilfunkkarte 10 können dabei für unterschiedliche IMEIs entsprechend unterschiedliche MIDlets gespeichert sein, oder es können zu einer IMEI mehrere MIDlets zur Auswahl stehen. Weiter können aufgrund der Prüfung der IMEI auch Zugriffsbedingungen eingestellt werden, z.B. eine Beschränkung der Häufigkeit, mit der ein MIDlet 12 an ein Mobilfunktelefon 20 übertragen werden kann.

Anstelle der Bereitstellung eines Links durch einen auf der Mobilfunkkarte 10 realisierten Webserver 14 während einer HTML-codierten Applikation kann die das Nachladen eines MIDlets fordernde Anwendung auch als SIM-Toolkit-Applikation ausgeführt sein. In diesem Fall wird, um dem Browser 22 auf dem Mobilfunktelefon 20 den Zugriff auf das MIDlet 12 zu ermöglichen, ein SIM-Toolkit-Kommando "Launch Browser" von der Mobilfunkkarte 10 an das Mobilfunktelefon 20 geschickt, das als Parameter eine URL direkt auf das JAD-File des MIDlet 12 auf der Mobilfunkkarte 10 enthält.

Fig. 3 illustriert die Interaktion zwischen einem installierten MIDlet 23 und einer Applikation 15 während einer Ausführung des MIDlets 23 auf dem Mobilfunktelefon 20. Prinzipiell kann eine Interaktion und/oder Kommunikation zwischen einem installierten MIDlet 23 und einem Java-Applet 15 der Mobilfunkkarte 10 erfolgen, indem das MIDlet- 23 die interne Java-Programmierschnittstelle des Java-Mobilfunktelefons 20 nutzt, um auf die Mobilfunkkarte 10 zuzugreifen. Hierbei ist die Interaktion zwischen dem Applet 15 und dem installierten MIDlet 23 in einer beliebigen Form möglich, vorzugsweise interagieren das MIDlet 23 und das Applet 15 jedoch derart, dass eine kombinierte sicherheitsrelevante Funktionalität für das Mobilfunktelefon 20 bereitgestellt wird, indem die Manipulationssicherheit der (U)SIM-Mobilfunkkarte 10 über eine geeignete Programmierschnittstelle (z. B. die interne Java-Programmierschnittstelle (API), die Bestandteil der JSR177-Spezifikation "The Security and Trust Services API for J2ME" ist) zwischen dem Mobilfunktelefon 20 und der darin eingesetzten Mobilfunkkarte 10 ausgenutzt wird.

Dadurch, dass das MIDlet 12 zusammen mit der Applikation 15 auf der (U)SIM-Mobilfunkkarte 10 an den Endnutzer ausgeliefert wird, steht dem Mobilfunktelefon 20 nach Installation des MIDlets 12 jeweils die korrekte Kombination aus Applet 15 und installiertem MIDlet 23 zur Verfügung. Beispielsweise kann eine kombinierte Sicherheitsanwendung ein MIDlet 23 umfassen, das eine graphische Benutzerschnittstelle für einen Nutzer des Mobilfunktelefon 20 bereitstellt, z.B. über den Browser 22, und das Applet 15 die eigentlichen von dem Prozessor 18 der Mobilfunkkarte 10 auszuführenden Sicherheitsalgorithmen umfasst.

Die Ausführung eines installierten MIDlets 23 auf dem Mobilfunktelefon 20 findet ausschließlich in dem Installationsspeicher 23 statt, wobei während der Laufzeit des MIDlets 23 durch interne Verwendung eines JSR177-Kommunikationspfads ("Java Specification Request") auf die (U)SIM-Mobilfunkkarte 10 bzw. deren Applet 15 zugegriffen werden kann (Schritt S10). Ein Mobilfunktelefon 20, das die JSR177-Spezifikation unterstützt, ermöglicht einem installierten MIDlet 23, den Zugriff auf die (U)SIM-Mobilfunkkarte 10 durch APDUs ("Application Protocol Data Unit") oder auf einer abstrakteren Kommunikationsebene über eine so genannte "Remote Method Invocation". Somit ist es möglich, eine gemeinsame Sicherheitsanwendung zu erstellen, die als MIDlet 23 eine graphische Benutzeroberfläche bietet (vgl. Schritt S8) und als Java-Applet 15 sicherheitsrelevante Schlüssel, Zugangsdaten, Algorithmen oder dergleichen über dieses graphische Benutzeroberfläche bereitstellt (vgl. Schritt S9). Auf diese Weise sind beliebige sicherheitsrelevante Anwendungen auf dem Mobilfunktelefon 20 implementierbar, z. B. Banking-Applikationen, sichere Zugangssysteme und dergleichen. Hierzu interagiert das MIDlet 23 in Schritt S8 mit dem Browser 22, über den sicherheitsrelevante Funktionen des Applets 15 von einem Endnutzer selektiert werden können, wobei das Applet 15 in SChitt S9 bestimmte sicherheitsrelevante Zugangsdaten oder Codes über den Browser 22 an den Endnutzer ausgeben kann.

## Patentansprüche

1. Verfahren zum Installieren (S1-S6) eines MIDlets (12; 23) auf einem Telekommunikationsendgerät (20), **gekennzeichnet durch** die Schritte:
- Abspeichern des MIDlets (12) auf einem mit dem Telekommunikationsendgerät (20) verbindbaren portablen Datenträger (10);
- Abspeichern einer ausführbaren Applikation (15) auf dem Datenträger, welche bei ihrer Ausführung die Installation des MIDlets (12; 23) veranlasst;
- Verbinden des Datenträgers (10) mit dem Telekommunikationsendgerät (20) über eine Datenkommunikationsverbindung; und
- Ausführen der Applikation (15) auf dem Datenträger auf Veranlassung durch einen Nutzer;
- Anfordern der Installation des MIDlets (12; 23) **durch** die Applikation (15) bei Erreichen eines bestimmten Punktes bei der Ausführung;
- Ausführen eines Schrittes zur Prüfung der Identität des Nutzers oder des Telekommunikationsendgerätes (20) **durch** die Applikation (15);
- Installieren (S1-S6) des MIDlets (12) **durch** Zugreifen (S4) auf den Speicher (11) des Datenträgers (10) **durch** das Telekommunikationsendgerät (20) über die Datenkommunikationsverbindung.

2. Verfahren nach Anspruch 1, **dadurch gekennzeichnet, dass** beim Installieren (S1-S6) das MIDlet (12) über die Datenkommunikationsverbindung aus dem Speicher (11) des Datenträgers ausgelesen wird (S5) und in einem auf dem Telekommunikationsendgerät (20) ausführbaren Format (23) in einem Installationsspeicher (21) des Telekommunikationsendgeräts (20) abgelegt wird (S6).

3. Verfahren nach Anspruch 1 oder 2, **dadurch gekennzeichnet, dass** beim Abspeichern das MIDlet (12) gemäß einem von dem Datenträger (10) unterstützten Kommunikationsprotokoll von einer externen Stelle in dem Speicher (11) abgespeichert wird.

4. Verfahren nach Anspruch 3, **dadurch gekennzeichnet, dass** der Datenträger (10) einen von einem Prozessor (18) des Datenträgers (10) ausführbaren Webserver (14) umfaßt und das Telekommunikationsendgerät (20) gemäß einem von dem Webserver (14) unterstützten Internetprotokoll über die Datenkommunikationsverbindung auf das MIDlet (12) zugreift.

5. Verfahren nach Anspruch 3 oder 4, **dadurch gekennzeichnet, dass** eine auf dem Datenträger (10) vorliegende, ausführbare Applikation (15) das Installieren (S1-S6) des MIDlets (12) auf dem Telekommunikationsendgerät (20) durch Senden (S3) einer von dem Telekommunikationsendgerät (20) aufrufbaren Speicheradresse des MIDlets (12) über die Datenkommunikationsverbindung an das Telekommunikationsendgerät (20) veranlasst.

6. Verfahren nach Anspruch 5, **dadurch gekennzeichnet, dass** die Applikation (15) das Installieren (S1-S6) des MIDlets (12) durch Übertragen (S2) einer von dem Telekommunikationsendgerät (20) ausführbaren, an den Webserver (14) gerichteten http-Anfrage, die eine auf das MIDlet (12) verweisende Verknüpfung umfasst, an das Telekommunikationsendgerät (20) veranlasst.

7. Verfahren nach einem der vorhergehenden Ansprüche, **dadurch gekennzeichnet, dass** das MIDlet (12) in einem auf dem Telekommunikationsendgerät (20) installierten Browser (22) mittels einer Verknüpfung in den Speicher (11) des Datenträgers (10) selektiert wird (S3) und durch Auflösen (S4, S5) der Verknüpfung über die Datenkommunikationsverbindung auf dem Telekommunikationsendgerät (20) installiert wird (S6).

8. Verfahren nach einem der vorhergehenden Ansprüche, **dadurch gekennzeichnet, dass** das Abspeichern des MIDlets (12) beim Herstellen des Datenträgers (10) durchgeführt wird und das Installieren (S1-S6) des MIDlets (12) nach Ausgabe des Datenträgers (10) von einem Nutzer des Telekommunikationsendgeräts (20) veranlasst wird.

9. Verfahren nach einem der vorhergehenden Ansprüche, **dadurch gekennzeichnet, dass** ein auf einer (U)SIM-Mobilfunkkarte als portablem Datenträger (10) vorliegendes Java-MIDlet (12) auf einem Java-fähigen Mobilfunktelefon als Telekommunikationsendgerät (20) installiert wird.

10. Verfahren zum Ausführen (S8-S10) eines MIDlets (23), das mit einem Verfahren nach einem der Ansprüche 1 bis 9 auf einem Telekommunikationsendgerät (20) installiert wurde, wobei das MIDlet (23) in einem Installationsspeicher (21) des Telekommunikationsendgeräts (20) installiert ist und von einem Prozessor des Telekommunikationsendgeräts (20) ausgeführt wird, **dadurch gekennzeichnet, dass** das MIDlet (23) über eine Programmierschnittstelle mit einer von dem Datenträger (10) ausführbaren Applikation (15) derart zusammenwirkt (S10), dass das MIDlet (23) und die Applikation (15) eine kombinierte Anwendung bilden, die dem Telekommunikationsendgerät (20) eine sicherheitsrelevante Funktionalität bereitstellt (S8, S9).

11. Verfahren nach Anspruch 10, **dadurch gekennzeichnet, dass** das MIDlet ein auf einer (U)SIM-Mobilfunkkarte vorliegendes Java-MIDlet (12) ist und das Telekommunikationsendgerät (20) ein Java-fähiges Mobilfunktelefon und die Applikation (15) und das MIDlet (23) über eine Java-Programmierschnittstelle des Telekommunikationsendgeräts (20) zusammenwirken (S10), wobei die Applikation (15) eine sicherheitsrelevante Funktion bereitstellt (S9) und das MIDlet (23) auf dem Telekommunikationsendgerät (20) eine Benutzeroberfläche (22) bildet (S8), über die auf die sicherheitsrelevante Funktion der Applikation (15) zugegriffen werden kann (S9).

12. Portabler Datenträger (10), umfassend einen Speicher (11), einen Prozessor (18) und eine Datenkommunikationsschnittstelle (19) für eine Verbindung des Datenträgers (10) mit einem Telekommunikationsendgerät (20), **gekennzeichnet durch** eine Steuereinrichtung (16), die eingerichtet ist, Schreibzugriffe von externen Stellen auf den Speicher (11) zuzulassen, mit denen ein zur Installation auf einem Telekommunikationsendgerät (20) bestimmtes MIDlet (12) sowie eine von dem Prozessor (18) ausführbare Applikation (15) in den Speicher (11) eingeschrieben werden, und einen Lesezugriff eines mit dem Datenträger (10) über die Datenkommunikationsschnittstelle (19) verbundenen Telekommunikationsendgeräts (20) auf den Speicher (11) zuzulassen, mit dem das MIDlet (12) aus dem Speicher (11) ausgelesen wird, wobei die ausführbare Applikation (15) eingerichtet ist, mit einem auf einem mit dem Datenträger (10) verbundenen Telekommunikationsendgerät (20) installierten MIDlet (23) über die Datenkommunikationsschnittstelle (19) derart zusammenzuwirken, dass die Applikation (15) und das MIDlet (12) eine kombinierte Anwendung bilden, die dem Telekommunikationsendgerät (20) eine sicherheitsrelevante Funktionalität bereitstellt, wobei die Steuereinrichtung (16) eingerichtet ist, eine Kommunikation zwischen der Applikation (15) und dem MIDlet (23) über die Datenkommunikationsschnittstelle (19) zuzulassen.

13. Datenträger (10) nach Anspruch 12, **gekennzeichnet durch** eine Kommunikationseinrichtung (17), die einem externen Gerät ein Kommunikationsprotokoll zum Einschreiben eines MIDlets (12) in den Speicher (11) bereitstellt, wobei
die Steuereinrichtung (16) eingerichtet ist, einen Schreibzugriff des externen Geräts gemäß dem unterstützten Kommunikationsprotokoll zuzulassen.

14. Datenträger (10) nach Anspruch 12 oder 13, **dadurch gekennzeichnet, dass** der Datenträger (10) eine USB-Speicherkarte, eine SD-Speicherkarte oder eine sichere Multimediakarte ist.

15. Datenträger (10) nach Anspruch 12 oder 13, **gekennzeichnet durch** einen von dem Prozessor (18) ausführbaren Webserver (14), der eingerichtet ist, in dem Speicher (11) vorliegende, von einem mit dem Datenträger (10) verbundenen Telekommunikationsendgerät (20) abrufbare Informationsdaten bereitzustellen, wobei die Steuereinrichtung (16) eingerichtet ist, einen Schreibzugriff auf den Speicher (11) zuzulassen, mit dem das MIDlet (12) als von dem Telekommunikationsendgerät (20) über den Webserver (14) abrufbare Informationsdaten in den Speicher (11) eingeschrieben wird.

16. Datenträger (10) nach Anspruch 15, **dadurch gekennzeichnet, dass** der Webserver (14) zum Abrufen des MIDlets (12) aus dem Speicher (11) ein Internetprotokoll bereitstellt, wobei die Steuereinrichtung (16) eingerichtet ist, einen Lesezugriff eines mit dem Datenträger (10) verbundenen Telekommunikationsendgeräts (20) gemäß dem Internetprotokoll zuzulassen, mit dem das MIDlet (12) über den Webserver (14) abgerufen wird.

17. Datenträger (10) nach Anspruch 15 oder 16, **gekennzeichnet durch** eine von dem Prozessor (18) ausführbare Applikation (15), die eingerichtet ist, eine Installation des in den Speicher (11) eingeschriebenen MIDlets (12) auf einem mit dem Datenträger (10) verbundenen Telekommunikationsendgerät (20) durch Übertragen einer von dem Telekommunikationsendgerät (20) ausführbaren, an den Werbserver (14) gerichteten http-Anfrage, die eine auf das MIDlet (12) verweisende Verknüpfung umfasst, an das Telekommunikationsendgerät (20) zu veranlassen.

18. Datenträger (10) nach einem der Ansprüche 12 bis 17, **dadurch gekennzeichnet, dass** die Steuereinrichtung (16) eingerichtet ist, einen Lesezugriff eines Browsers (22) des Telekommunikationsendgeräts (20) auf den Speicher (11) zuzulassen.

19. Datenträger (10) nach einem der Ansprüche 12 bis 18" **dadurch gekennzeichnet, dass** die Applikation (15) eingerichtet ist, über eine Java-Programmierschnittstelle des Telekommunikationsendgeräts (20) mit dem installierten MIDlet (23) zusammenzuwirken, und die Applikation (15) über die Java-Programmierschnittstelle eine von dem installierten MIDlet (23) aufrufbare, sicherheitsrelevante Funktion bereitstellt.

20. Datenträger (10) nach einem der Ansprüche 12 bis 19, **dadurch gekennzeichnet, dass** der Datenträger (10) eine in ein Mobilfunktelefon als Telekommunikationsendgerät (20) einsetzbare (U)SIM-Mobilfunkkarte ist, auf der ein auf dem Mobilfunktelefon installierbares Java-MIDlet (12) gespeichert ist.

21. Datenträger (10) nach Anspruch 20, **dadurch gekennzeichnet, dass** die Applikation (15) eine SIM-Toolkit-Applikation ist.

## Claims

1. A method for installing (S1-S6) a MIDlet (12; 23) on a telecommunication terminal (20), **characterized by** the steps of::
- storing the MIDlet (12) on a portable data carrier (10) connectible to the telecommunication terminal (20);
- storing on the data carrier an executable application (15) which, upon its execution, prompts the installation of the MIDlet (12; 23);
- connecting the data carrier (10) to the telecommunication terminal (20) via a data communication connection; and
- executing the application (15) on the data carrier upon prompting by a user;
- requesting the installation of the MIDlet (12; 23) by the application (15) upon reaching a certain point of the execution;
- executing a step for checking the identity of the user or of the telecommunication terminal (20) by the application (15);
- installing (S1-S6) the MIDlet (12) through accessing (S4) the memory (11) of the data carrier (10) by the telecommunication terminal (20) via the data communication connection.

2. The method according to claim 1, **characterized in that** during installation (S1-S6) the MIDlet (12) is read out (S5) from the memory (11) of the data carrier via the data communication connection and is stored (S6) in a format (23) executable on the telecommunication terminal (20) in an installation memory (21) of the telecommunication terminal (20).

3. The method according to claim 1 or 2, **characterized in that** upon storing the MIDlet (12) is stored in the memory (11) by an external site in accordance with a communication protocol supported by the data carrier (10).

4. The method according to claim 3, **characterized in that** the data carrier (10) comprises a web server (14) executable by a processor (18) of the data carrier (10) and the telecommunication terminal (20) accesses the MIDlet (12) via the data communication connection in accordance with an Internet protocol supported by the web server (14).

5. The method according to claim 3 or 4, **characterized in that** an executable application (15) present on the data carrier (10) prompts the installation (S1-S6) of the MIDlet (12) on the telecommunication terminal (20) by sending (S3) a memory address of the MIDlet (12) that is callable by the telecommunication terminal (20) to the telecommunication terminal (20) via the data communication connection.

6. The method according to claim 5, **characterized in that** the application (15) prompts the installation (S1-S6) of the MIDlet (12) by transmitting (S2) to the telecommunication terminal (20) an http request that is executable by the telecommunication terminal (20), directed at the web server (14) and comprises a link pointing to the MIDlet (12).

7. The method according to any of the preceding claims, **characterized in that** the MIDlet (12) is selected (S3) in a browser (22) installed on the telecommunication terminal (20) by means of a link to the memory (11) of the data carrier (10), and is installed (S6) on the telecommunication terminal (20) by resolution (S4, S5) of the link via the data communication connection.

8. The method according to any of the preceding claims, **characterized in that** the storing of the MIDlet (12) is carried out during the manufacture of the data carrier (10), and the installation (S1-S6) of the MIDlet (12) is prompted by a user of the telecommunication terminal (20) after the issue of the data carrier (10).

9. The method according to any of the preceding claims, **characterized in that** a Java MIDlet (12) present on a (U)SIM mobile communication card as portable data carrier (10) is installed on a Java-enabled mobile telephone as the telecommunication terminal (20).

10. A method for executing (S8-S10) a MIDlet (23) installed on a telecommunication terminal (20) by a method according to any of the claims 1 to 9, wherein the MIDlet (23) is installed in an installation memory (21) of the telecommunication terminal (20) and is executed by a processor of the telecommunication terminal (20), **characterized in that** the MIDlet (23) interacts (S10) with an application (15) executable by the data carrier (10) via a programming interface in such a fashion that the MIDlet (23) and the application (15) form a combined-application making available (S8, S9) a security-relevant function to the telecommunication terminal (20).

11. The method according to claim 10, **characterized in that** the MIDlet- is a Java MIDlet (12) present on a (U)SIM mobile communication card and the telecommunication terminal (20) is a Java-enabled mobile telephone and the application (15) and the MIDlet (23) interact (S10) via a Java programming interface of the telecommunication terminal (20), wherein the application (15) makes available (S9) a security-relevant function and the MIDlet (23) forms (S8) a user interface (22) on the telecommunication terminal (20), via which interface the security-relevant function of the application (15) can be accessed (S9).

12. A portable data carrier (10) comprising a memory (11), a processor (18) and a data communication interface (19) for connection of the data carrier (10) with a telecommunication terminal (20), **characterized by** a control device (16) which is adapted to permit write accesses from external sites to the memory (11), by which a MIDlet (12) determined for installation on a telecommunication terminal (20) and an application (15) executable by the processor (18) are written to the memory (11), and to permit a read access to the memory (11) of a telecommunication terminal (20) connected to the data carrier (10) via the data communication interface (19), by which the MIDlet (12) is read out from the memory (11), wherein the executable application (15) is adapted to so interact with a MIDlet (23) installed on a telecommunication terminal (20) connected to the data carrier (10) via the data communication interface (19) that the application (15) and the MIDlet (12) form a combined-application which makes available a security-relevant function to the telecommunication terminal (20), wherein the control device (16) is adapted to permit a communication between the application (15) and the MIDlet (23) via the data communication interface (19).

13. The data carrier (10) according to claim 12, **characterized by** a communication device (17) which makes available a communication protocol to an external device for writing a MIDlet (12) to the memory (11), wherein the control means (16) is adapted to permit a write access of the external device in accordance with the supported communication protocol.

14. The data carrier (10) according to claim 12 or 13, **characterized in that** the data carrier (10) is a USB memory card, an SD memory card or a secure multimedia card.

15. The data carrier (10) according to claim 12 or 13, **characterized by** a web server (14) executable by the processor (18), said web server being adapted to make available information data retrievable from a telecommunication terminal (20) connected to the data carrier (10), wherein the control device (16) is adapted to permit a write access to the memory (11), by which the MIDlet (12) is written to the memory (11) as information data retrievable from the telecommunication terminal (20) via the web server (14).

16. The data carrier (10) according to claim 15, **characterized in that** the web server (14) makes available an Internet protocol for retrieving the MIDlet (12) from the memory (11), wherein the control device (16) is adapted to permit a read access of a telecommunication terminal (20) connected to the data carrier (10) in accordance with the Internet protocol by which the MIDlet (12) is retrieved via the web server (14).

17. The data carrier (10) according to claim 15 or 16, **characterized by** an application (15) executable by the processor (18), said application being adapted to prompt an installation of the MIDlet (12) written to the memory (11) on a telecommunication terminal (20) connected to the data carrier (10) by transmitting to the telecommunication terminal (20) an http request that is executable by the telecommunication terminal (20), directed at the web server (14) and comprises a link pointing to the MIDlet (12).

18. The data carrier (10) according to any of the claims 12 to 17, **characterized in that** the control device (16) is adapted to permit a read access of a browser (22) of the telecommunication terminal (20) to the memory (11).

19. The data carrier (10) according to any of the claims 12 to 18, **characterized in that** the application (15) is adapted to interact with the installed MIDlet (23) via a Java programming interface of the telecommunication terminal (20), and the application (15) makes available a security-relevant function callable from the installed MIDlet (23) via the Java programming interface.

20. The data carrier (10) according to any of the claims 12 to 19, **characterized in that** the data carrier (10) is a (U)SIM card insertable in a mobile telephone as the telecommunication terminal (20), on which card a Java MIDlet (12) is stored that can be installed on the mobile telephone.

21. The data carrier (10) according to claim 20, **characterized in that** the application (15) is a SIM toolkit application.

## Revendications

1. Procédé d'installation (S1-S6) d'un MIDlet (12; 23) sur un terminal de télécommunication (20), **caractérisé par** les étapes:
- mémorisation du MIDlet (12) sur un support de données (10) portable pouvant être relié au terminal de télécommunication (20);
- mémorisation, sur le support de données, d'une application (15) exécutable, laquelle, lors de son exécution, déclenche l'installation du MIDlet (12; 23);
- liaison du support de données (10) au terminal de télécommunication (20) par l'intermédiaire d'une liaison de communication de données;
- exécution de l'application (15) sur le support de données par déclenchement de la part d'un utilisateur;
- requête de l'installation du MIDlet (12; 23) par l'application (15) quand un point déterminé est atteint lors de l'exécution;
- exécution d'une étape de vérification de l'identité de l'utilisateur ou du terminal de télécommunication (20) par l'application (15);
- installation (S1-S6) du MIDlet (12) par accès (S4) à la mémoire (11) du support de données (10) par le terminal de télécommunication (20) par l'intermédiaire de la liaison de communication de données.

2. Procédé selon la revendication 1, **caractérisé en ce que**, lors de l'installation (S1-S6), le MIDlet (12) est, par l'intermédiaire d'une liaison de communication de données, lu (S5) depuis la mémoire (11) du support de données et est déposé (S6), dans un format (23) exécutable sur le terminal de télécommunication (20), dans une mémoire d'installation (21) du terminal de télécommunication (20).

3. Procédé selon la revendication 1 ou 2, **caractérisé en ce que**, lors de la mémorisation, le MIDIet (12) est, conformément à un protocole de communication soutenu par le support de données (10), mémorisé depuis un poste externe dans la mémoire (11).

4. Procédé selon la revendication 3, **caractérisé en ce que** le support de données (10) comprend un serveur Web (14) exécutable par un processeur (18) du support de données (10), et **en ce que** le terminal de télécommunication (20) accède au MIDlet (12) conformément à un protocole Internet soutenu par le serveur Web (14), par l'intermédiaire de la liaison de communication de données.

5. Procédé selon la revendication 3 ou 4, **caractérisé en ce qu'**une application (15) exécutable se trouvant sur le support de données (10) déclenche l'installation (S1-S6) du MIDlet (12) sur le terminal de télécommunication (20) par envoi (S3) au terminal de télécommunication (20), par l'intermédiaire de la liaison de communication de données, d'une adresse mémoire du MIDlet (12) pouvant être appelée par le terminal de télécommunication (20).

6. Procédé selon la revendication 5, **caractérisé en ce que** l'application (15) déclenche l'installation (S1-S6) du MIDlet (12) par transmission (S2), au terminal de télécommunication (20), d'une demande http exécutable par le terminal de télécommunication (20), laquelle est adressée au serveur Web (14) et comprend un lien renvoyant au MIDlet (12).

7. Procédé selon une des revendications précédentes, **caractérisé en ce que** le MIDlet (12) est sélectionné (S3) dans un navigateur (22) installé sur le terminal de télécommunication (20), au moyen d'un lien dans la mémoire (11) du support de données (10), et est installé (S6) par dissolution (S4, S5) du lien par l'intermédiaire de la liaison de communication de données sur le terminal de télécommunication (20).

8. Procédé selon une des revendications précédentes, **caractérisé en ce que** la mémorisation du MIDlet (12) est effectuée lors de la fabrication du support de données (10) et **en ce que** l'installation (S1-S6) du MIDlet (12) est déclenchée après délivrance du support de données (10), par un utilisateur du terminal de télécommunication (20).

9. Procédé selon une des revendications précédentes, **caractérisé en ce qu'**un MIDlet Java (12) se trouvant sur une carte de téléphonie mobile (U)SIM en tant que support de données (10) portable est installé sur un radiotéléphone mobile compatible avec Java en tant que terminal de télécommunication (20).

10. Procédé d'exécution (S8, S10) d'un MIDlet (23) qui a été installé par un procédé selon une des revendications de 1 à 9 sur un terminal de télécommunication (20), le MIDlet (23) étant installé dans une mémoire d'installation (21) du terminal de télécommunication (20) et étant exécuté par un processeur du terminal de télécommunication (20), **caractérisé en ce que** le MIDlet (23) co-agit (S10) de telle façon, par l'intermédiaire d'une interface de programmation, avec une application (15) exécutable par le support de données (10), que le MIDlet (23) et l'application (15) constituent une utilisation combinée qui met à disposition (S8, S9) du terminal de télécommunication (20) une fonctionnalité touchant à la sécurité.

11. Procédé selon la revendication 10, **caractérisé en ce que** le MIDlet est un MIDlet Java (12) se trouvant sur une carte de téléphonie mobile (U)SIM, et **en ce que** le terminal de télécommunication (20) est un radiotéléphone mobile compatible avec Java, et **en ce que** l'application (15) et le MIDlet (23) co-agissent (S10) par l'intermédiaire d'une interface de programmation Java du terminal de télécommunication (20), l'application (15) mettant à disposition (S9) une fonctionnalité touchant à la sécurité et le MIDlet (23) constituant (S8) sur le terminal de télécommunication (20) une interface utilisateur (22) par l'intermédiaire de laquelle il peut être accédé (S9) à la fonction de l'application (15) touchant à la sécurité.

12. Support de données (10) portable, comprenant une mémoire (11), un processeur (18) et une interface de communication de données (19) pour une liaison du support de données (10) avec un terminal de télécommunication (20), **caractérisé par** un dispositif de commande (16) qui est configuré pour autoriser des accès en écriture dans la mémoire (11) depuis des postes externes, par lesquels un MIDIet (12) destiné à l'installation sur un terminal de télécommunication (20) ainsi qu'une application (15) exécutable par le processeur (18) sont entrés dans la mémoire (11), et pour autoriser un accès en lecture d'un terminal de télécommunication (20), relié au support de données (10) par l'intermédiaire de l'interface de communication de données (19), dans la mémoire (11), par lequel le MIDlet (12) est lu depuis la mémoire (11), l'application (15) exécutable étant configurée pour co-agir de telle façon, par l'intermédiaire de l'interface de communication de données (19), avec un MIDIet (23) installé sur un terminal de télécommunication (20) relié au support de données (10), que l'application (15) et le le MIDlet (12) constituent une utilisation combinée qui met à disposition du terminal de télécommunication (20) une fonctionnalité touchant à la sécurité, le dispositif de commande (16) étant configuré pour autoriser une communication entre l'application (15) et le le MIDlet (23) par l'intermédiaire de l'interface de communication de données (19).

13. Support de données (10) selon la revendication 12, **caractérisé par** un dispositif de communication (17) qui met à disposition d'un appareil externe un protocole de communication pour entrer un MIDlet (12) dans la mémoire (11), le dispositif de commande (16) étant configuré pour autoriser un accès en écriture de l'appareil externe conformément au protocole de communication soutenu.

14. Support de données (10) selon la revendication 12 ou 13, **caractérisé en ce que** le support de données (10) est une carte mémoire USB, une carte mémoire SD ou une carte de multimédia sécurisée.

15. Support de données (10) selon la revendication 12 ou 13, **caractérisé par** un serveur Web (14) qui est exécutable par le processeur (18) et est configuré pour mettre à disposition des données d'information qui se trouvent dans la mémoire (11) et qui sont consultables par un terminal de télécommunication (20) relié au support de données (10), le dispositif de commande (16) étant configuré pour autoriser un accès en écriture dans la mémoire (11), par lequel le MIDlet (12) est entré dans la mémoire (11) en tant que données d'information consultables par le terminal de télécommunication (20) par l'intermédiaire du serveur Web (14).

16. Support de données (10) selon la revendication 15, **caractérisé en ce que** le serveur Web (14), pour la consultation du MIDIet (12) à partir de la mémoire (11), met à disposition un protocole Internet, le dispositif de commande (16) étant configuré pour autoriser conformément au protocole Internet un accès en lecture d'un terminal de télécommunication (20) relié au support de données (10), par lequel le MIDlet (12) est consulté par l'intermédiaire du serveur Web (14).

17. Support de données (10) selon la revendication 15 ou 16, **caractérisé par** une application (15) qui est exécutable par le processeur (18) et est configurée pour déclencher une installation du MIDlet (12) entré dans la mémoire (11) sur un terminal de télécommunication (20) relié au support de données (10), par transmission, au terminal de télécommunication (20), d'une demande http, laquelle est exécutable par le terminal de télécommunication (20) et est adressée au serveur Web (14) et comprend un lien renvoyant au MIDlet (12).

18. Support de données (10) selon une des revendications de 12 à 17, **caractérisé en ce que** le dispositif de commande (16) est configuré pour autoriser un accès en lecture d'un navigateur (22) du terminal de télécommunication (20) dans la mémoire (11).

19. Support de données (10) selon une des revendications de 12 à 18, **caractérisé en ce que** l'application (15) est configurée pour co-agir, par l'intermédiaire d'une interface de programmation Java du terminal de télécommunication (20), avec le MIDlet (23) installé, et **en ce que** l'application (15) met à disposition, par l'intermédiaire de l'interface de programmation Java, une fonction qui touche à la sécurité et est appelable par le MIDlet (23) installé.

20. Support de données (10) selon une des revendications de 12 à 19, **caractérisé en ce que** le support de données (10) est une carte de téléphonie mobile (U)SIM qui est insérable dans un radiotéléphone mobile en tant que terminal de télécommunication (20) et sur laquelle un MIDlet Java (12) pouvant être installé sur le radiotéléphone mobile est mémorisé.

21. Support de données (10) selon la revendication 20, **caractérisé en ce que** l'application (15) est une application boîte à outils SIM.
